# EUROPEAN PATENT SPECIFICATION

(11) **EP 3 878 115 B1**
(45) Date of publication and mention of the grant of the patent: **30.11.2022**
(21) Application number: 19805069.2
(22) Date of filing: 29.10.2019
(51) Int. Cl.: H04L 1/00, H04L 1/18

(54) **APPARATUS AND METHODS FOR REAL TIME SOFT COMBINING OF DECRYPTED DATA**
VORRICHTUNG UND VERFAHREN ZUM ECHTZEIT-SOFT-COMBINING VON ENTSCHLÜSSELTEN DATEN
APPAREIL ET PROCÉDÉS DE COMBINAISON LOGICIELLE EN TEMPS RÉEL DE DONNÉES DÉCHIFFRÉES

(30) Priority: 07.11.2018 US 201816183712
(43) Date of publication of application: 15.09.2021
(73) Proprietor: QUALCOMM Incorporated, San Diego, CA 92121-1714 (US)
(72) Inventor: LEE, Changhau, San Diego, California 92121-1714 (US); DENBOER, Huibert, San Diego, California 92121-1714 (US)
(74) Representative: Bardehle Pagenberg Partnerschaft mbB Patentanwälte Rechtsanwälte
(86) International application number: PCT/US2019/058466
(87) International publication number: WO 2020/096806

(56) References cited:
- WO-A1-00/62467
- WO-A1-2013/050550
- NOKIA: "Solution to problem of MAC based ciphering with Type II/III hybrid ARQ", 3GPP DRAFT; R2-99236, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Yokohama; 19990521, 21 May 1999 (1999-05-21), XP050112534, [retrieved on 1999-05-21]

## Description

### PRIORITY

The present Application for Patent claims priority to Non-provisional Application No. 16/183,712 entitled "APPARATUS AND METHODS FOR REAL TIME SOFT COMBINING OF DECRYPTED DATA" filed November 7, 2018, assigned to the assignee hereof.

### FIELD OF DISCLOSURE

This disclosure relates generally to wireless transmissions, and more specifically, but not exclusively, to Bluetooth transmissions.

### BACKGROUND

Wireless transmission methods generally provide for protocols to transmit data and retransmit the data if the original transmission was not received or received with errors. For example, the Bluetooth (BT) specification 5.0 provides for a method to transmit, and retransmit, a message until the receiving device can decode the message error free. Messages are usually encrypted and protected with a Message Integrity Check (MIC). In some cases, the initial transmission and each subsequent retransmission is encrypted with a unique nonce. For instance, for BT audio links, extended synchronous connectionoriented (eSCO) packets use a clock-based nonce that increments for every transmission and retransmission. Using a unique nonce for each message results in a unique encryption key stream and unique MIC. This means that the received encrypted data stream for each transmission and retransmission of the same message will be completely different from each other. In other words, each message will have a different cyclic redundancy check (CRC) value.

Real-time soft combining of BT transmissions and retransmissions must generate an encrypted data stream in order to validate the received CRC. Real-time soft combining buffers each previously received message and then attempts to correct the currently received message on the fly with combined data to validate the CRC. In accordance with the BT specification, the CRC is calculated and verified using encrypted data. Therefore, the real-time soft combining must generate an encrypted data stream of the combined data in order to validate the CRC. However, performing real-time soft combining on encrypted data is not possible for Bluetooth transmissions and retransmissions when using a unique nonce for each message. A unique nonce essentially scrambles each encrypted message which makes it impossible to combine encrypted data as required for the CRC validation. Simply performing real-time soft combining on decrypted data is also not viable since the encrypted CRC is based on the encrypted data and not the decrypted data so the encrypted CRC cannot be validated with the decrypted data.

Accordingly, there is a need for systems, apparatus, and methods that overcome the deficiencies of conventional approaches including the methods, system and apparatus provided hereby.

The patent document WO2013050550 A1 discloses a method and system designed in order to soft combine encrypted packets. An original packet and its retransmission, encrypted by respective encryption keys, are soft combined before being channel decoded.

The patent document WO0062467 A1 discloses a method wherein, in order to soft combine failed encrypted packets and their retransmissions, forces the transmitter to apply the same encryption keys to both.

### SUMMARY

The present invention is defined by the attached claims.

### BRIEF DESCRIPTION OF THE DRAWINGS

A more complete appreciation of aspects of the disclosure and many of the attendant advantages thereof will be readily obtained as the same becomes better understood by reference to the following detailed description when considered in connection with the accompanying drawings which are presented solely for illustration and not limitation of the disclosure, and in which:
Figure 1 illustrates an exemplary flow of packet retransmission for soft combining in accordance with some examples of the disclosure;
Figure 2 illustrates an exemplary partial process for real time soft combining of a BR/EDR bit stream in accordance with some examples of the disclosure;
Figure 3 illustrates an exemplary partial process for real time soft combining of a LE Uncoded PHY bit stream in accordance with some examples of the disclosure;
Figure 4 illustrates an exemplary partial process for real time soft combining of a LE Coded PHY bit stream in accordance with some examples of the disclosure;
Figure 5 illustrates a partial method for soft combining of decrypted data in accordance with some examples of the disclosure;
Figure 6 illustrates an exemplary mobile device in accordance with some examples of the disclosure; and
Figure 7 illustrates various electronic devices that may be integrated with any of the aforementioned integrated device, semiconductor device, integrated circuit, die, interposer, package or package-on-package (PoP) in accordance with some examples of the disclosure.

In accordance with common practice, the features depicted by the drawings may not be drawn to scale. Accordingly, the dimensions of the depicted features may be arbitrarily expanded or reduced for clarity. In accordance with common practice, some of the drawings are simplified for clarity. Thus, the drawings may not depict all components of a particular apparatus or method. Further, like reference numerals denote like features throughout the specification and figures.

### DETAILED DESCRIPTION

The exemplary methods, apparatus, and systems disclosed herein mitigate shortcomings of the conventional methods, apparatus, and systems, as well as other previously unidentified needs. For example, one aspect of the disclosure allows for continuously combining the contents of each transmitted message and subsequent retransmitted message even when a unique nonce is used for each encrypted message. The received data stream is decrypted and re-encrypted on the fly to meet all the requirements of real-time soft combining of the decrypted payload and the validation of the encrypted CRC. In this example, the currently received message payload is decrypted on the fly so that it can be soft-combined in real time with previously decrypted messages. The corrected message payload is re-encrypted on the fly so that the CRC verification can be performed on combined encrypted data. A unique nonce will also generate a unique decrypted MIC for each message. Therefore, real-time soft combining cannot be performed on the decrypted MIC of BT transmissions and retransmissions.

One example disclosed herein allows additional real time control of the Advanced Encryption Standard Counter Code Mode (AES-CCM) encryption/decryption hardware. The encryption nonce may be dynamically selected based on the logical link. Logical link can be communicated in various ways (e.g., a logical transport address (LT_ADDR) field in the packet header). Once the LT_ADDR is decoded, the correct nonce must be selected and the encryption key stream must be calculated immediately and pre-fetched from the crypto block. The pre-fetch of the encryption key stream is beneficial since normally such a key stream is not available until much later in time. In one example, the encryption key stream may be continuously pre-fetched and fed to the real-time soft combining logic. In conventional approaches, the crypto block is initialized much later in time since the AES-CCM B0, B1 inputs require contents from the entire packet/payload header (such as the payload length field). Also in conventional approaches, the crypto block processing lags far behind the actual received serial data because AES-CCM operates on 128-bit blocks of data.

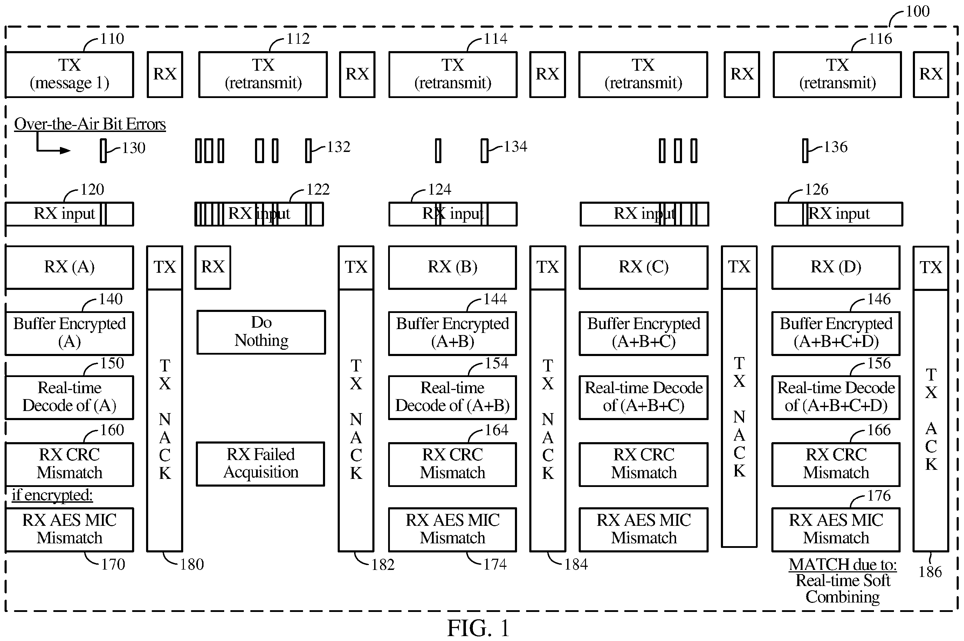

Figure 1 illustrates an exemplary flow of packet retransmission for soft combining in accordance with some examples of the disclosure. As shown in Figure 1, an exemplary flow 100 may include transmission (e.g., a BT transmission) of a first encrypted packet 110, reception of the first encrypted packet 120 where the first encrypted packet 120 has one or more errors 130, storing or buffering 140 the first encrypted packet 120, real time decoding 150 of the stored first encrypted packet 120, performing a CRC 160 on the first encrypted packet 120, and performing a MIC 170 on the first encrypted packet 120. As shown in Figure 1, when the first encrypted packet 120 has errors 130, the CRC 160 and/or MIC 170 will show a mismatch and a negative acknowledgment or no acknowledgment (NACK) 180 is sent to the transmitting device. If too many errors 132 are detected in an encrypted packet 112, nothing is done with the packet and a NACK 182 is sent to the transmitting device. After a NACK 180 or 182 is received by the transmitting device, for example, the flow 100 may include transmission (e.g., a BT transmission) of a second encrypted packet 114 (e.g., retransmission of the first encrypted packet 110 payload), reception of the second encrypted packet 124 where the second encrypted packet 124 has one or more errors 134, storing or buffering 144 the second encrypted packet 124 along with the first encrypted packet 120, real time decoding 154 of the stored first corrected packet 124 that includes portions of the first encrypted packet 120 and the second encrypted packet 124 after soft combining, performing a CRC 164 on the first corrected packet 121, and performing a MIC 174 on the first corrected packet 121. As shown in Figure 1, when the first corrected packet 121 has errors 130 and 134, the CRC 164 and/or MIC 174 will show a mismatch and a negative acknowledgment or no acknowledgment (NACK) 184 is sent to the transmitting device.

This flow 100 will continue until a soft combining of receive packets results in a corrected packet with the transmission errors replaced by correct data received in other encrypted packets. Soft combining allows the transmission errors of a received packet to be replaced with correct data from subsequent packets even if those subsequent packets also have other errors. This allows a corrected packet to be assembled without the need for continuous retransmission until a packet is received without any errors. For example, after a NACK is received by the transmitting device, the flow 100 may include transmission (e.g., a BT transmission) of a third encrypted packet 116 (e.g., retransmission of the first encrypted packet 110 payload), reception of the third encrypted packet 126 where the third encrypted packet 126 has one or more errors 136, storing or buffering 146 the third encrypted packet 126 along with the previous encrypted packets, real time decoding 156 of the stored second corrected packet 126 that includes portions of the first encrypted packet 120, the second encrypted packet 124, the third encrypted packet 126 etc. after soft combining, performing a CRC 166 on the second corrected packet 123, and performing a MIC 176 on the second corrected packet 123. As shown in Figure 1, when the CRC 166 and MIC 176 of the second corrected packet 123 has no errors, the CRC 166 and/or MIC 176 will show a match and an acknowledgment (ACK) 186 is sent to the transmitting device indicating the first payload has been received.

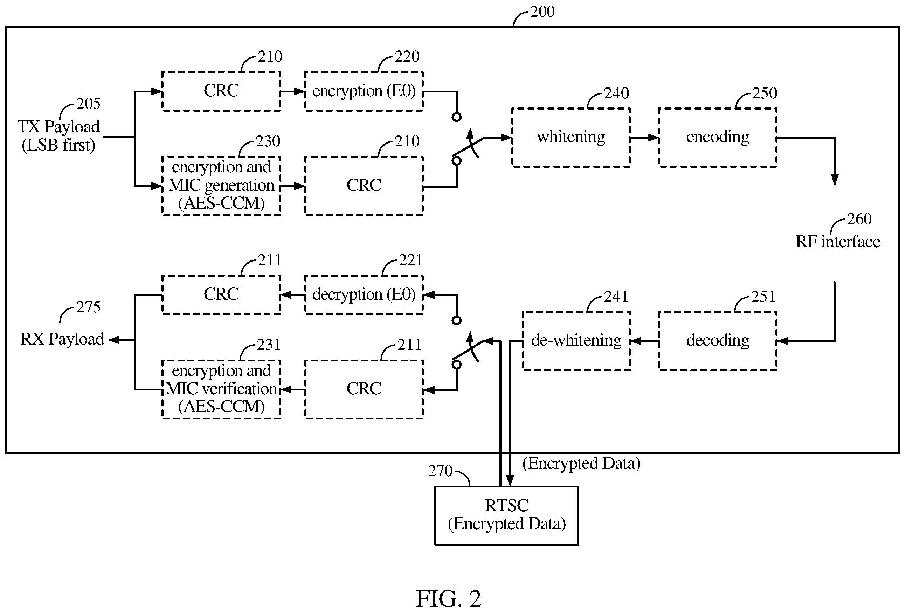

Figure 2 illustrates an exemplary partial process for real time soft combining of a Basic Rate/Enhanced Data Rate (BR/EDR) bit stream in accordance with some examples of the disclosure. As shown in Figure 2, a partial process 200 for data transmission (e.g., data eSCO transmission by a BT enabled device) may include a payload 205 for transmission that may follow one of the two paths shown prior to transmission. For instance, in one path, a CRC 210 value may be determined for the payload 205 and then the payload may be encrypted 220. In the second path, a payload 205 may be subject to encryption and MIC generation 230 such as AES-CCM then a CRC 210 value may be determined. Next, the encrypted payload 205 may be subject to whitening 240 and then encoding 250. The encoded payload 205 is transmitted to a receiving device through an RF interface 260. The received encoded payload 275 is decoded 251, then subject to de-whitening 241 followed by real time soft-combining 270 of the encrypted data of the payload (e.g., flow 100) prior to following one of two paths depending on how the payload 205 was encrypted prior to transmission. For instances, in one path, a CRC 211 value may checked for the received payload 275, and then the received payload 275 may be subject to a decryption and MIC verification 231. In the second path, the received payload 275 may be subject to decryption 221 and then a CRC 211 value may be checked. The real time soft-combining 270 may include storage of decrypted packets, prefetching of encryption codes so that the received payload 275 may be decoded, combined with any retransmission of the received payload 275 to remove errors, and re-encoding the received payload after correction to verify CRC values or MIC values.

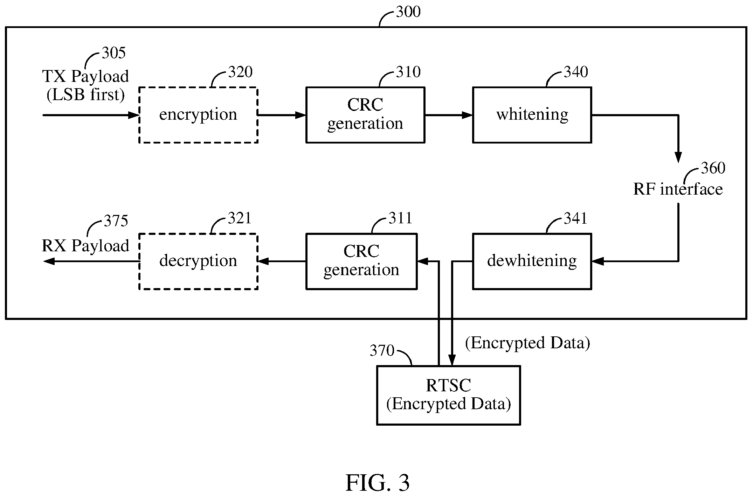

Figure 3 illustrates an exemplary partial process for real time soft combining of a low energy uncoded physical (LE Uncoded PHY) bit stream in accordance with some examples of the disclosure. As shown in Figure 3, a partial process 300 for data transmission (e.g., data transmission by a BT enabled device) may include a payload 305 for transmission that may be subject to encryption 320, followed by a CRC 310 value generation, then the payload 305 may be subject to whitening 340 and transmitted to a receiving device through an RF interface 360. The received encoded payload 305 is subject to de-whitening 341 followed by real time soft-combining 370 of the encrypted data of the payload (e.g., flow 100) to generate a correct payload 375 prior to any integrity checks. For instance, a CRC 311 value may checked for the corrected payload 375 and then the corrected payload 375 may be subject to a decryption process 321. The real time soft-combining 370 may include storage of decrypted packets, prefetching of encryption codes so that the received payload may be decoded in real time on the fly, combined with any retransmission of the received payload to remove errors, and re-encoding the received payload after correction to verify CRC values (or MIC values). It should be understood that the soft combining of received payloads is in response to detected errors in a payload and the combining of subsequent retransmitted messages to correct the payload even when unique nonces are used.

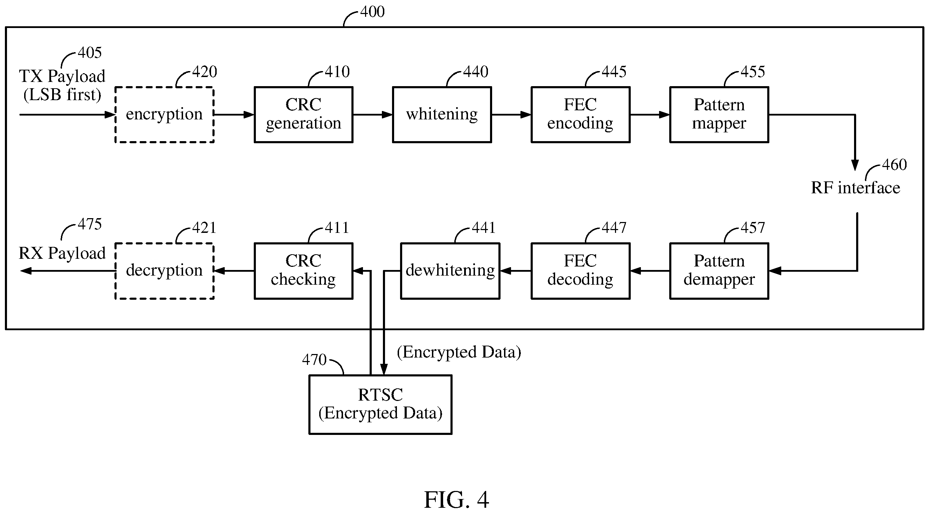

Figure 4 illustrates an exemplary partial process for real time soft combining of a low energy coded physical (LE Coded PHY) bit stream in accordance with some examples of the disclosure. As shown in Figure 4, a partial process 400 for data transmission (e.g., data transmission by a BT enabled device) may include a payload 405 for transmission that may be subject to encryption 420, followed by a CRC 410 value generation, then the payload 405 may be subject to whitening 440, Forward Error Correction (FEC) encoding 445, pattern mapping 455, and transmitted to a receiving device through an RF interface 460. The received encoded payload 405 is subject to pattern de-mapping 457, FEC decoding 447, and de-whitening 441 followed by real time soft-combining 470 of the encrypted data of the payload (e.g., flow 100) 405 to generate a correct payload 475 prior to any integrity checks. For instance, a CRC 411 value may checked for the corrected payload 475 and then the corrected payload 475 may be subject to a decryption process 421. The real time soft-combining 470 may include storage of decrypted packets, prefetching of encryption codes so that the received payload may be decoded in real time on the fly, combined with any retransmission of the received payload to remove errors, and re-encoding the received payload after correction to verify CRC values (or MIC values). It should be understood that the soft combining of received payloads is in response to detected errors in a payload and the combining of subsequent retransmitted messages to correct the payload even when unique nonces are used.

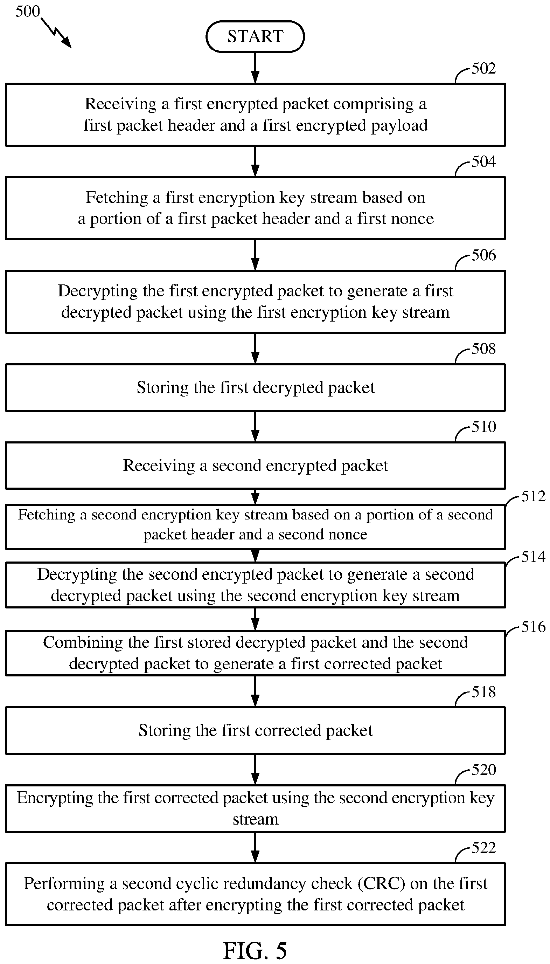

Figure 5 illustrates the claimed method for soft combining of decrypted data. As shown in Figure 5, the partial method 500 begins in block 502 with receiving a first encrypted packet comprising a first packet header and a first encrypted payload. The partial method 500 continues in block 504 with fetching a first encryption key stream based on a portion of a first packet header and a first nonce. The partial method 500 continues in block 506 with decrypting the first encrypted packet to generate a first decrypted packet using the first encryption key stream. The partial method 500 continues in block 508 with storing the first decrypted packet. The partial method 500 continues in block 510 with receiving a second encrypted packet. The partial method 500 continues in block 512 with fetching a second encryption key stream based on a portion of a second packet header and a second nonce. The partial method 500 continues in block 514 with decrypting the second encrypted packet to generate a second decrypted packet using the second encryption key stream. The partial method 500 continues in block 516 with combining the first stored decrypted packet and the second decrypted packet to generate a first corrected packet. The partial method 500 continues in block 518 with storing the first corrected packet. The partial method 500 continues in block 520 with encrypting the first corrected packet using the second encryption key stream. The partial method 500 concludes in block 522 with performing a second cyclic redundancy check (CRC) on the first corrected packet after encrypting the first corrected packet. Further, the partial method 500 includes performing a first CRC on the first encrypted packet and requesting a retransmission of the first encrypted packet when the first CRC indicates an error. In a preferred embodiment of the invention, the method further includes requesting a re-transmission of the first encrypted packet when the second CRC indicates an error; receiving a third encrypted packet; decrypting the third encrypted packet to generate a third decrypted packet; storing the third decrypted packet; combining the first decrypted packet, the second decrypted packet, and the third decrypted packet to generate a second corrected packet; encrypting the second corrected packet using the encryption key stream; performing a third CRC on the second corrected packet; and transmitting an acknowledge message when the third CRC indicates no errors.

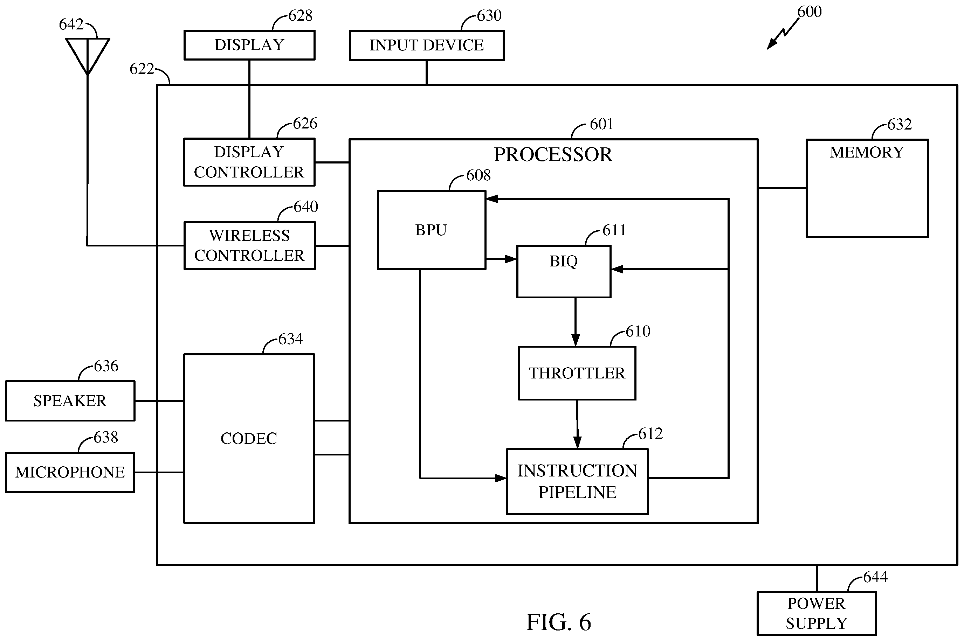

Figure 6 illustrates an exemplary mobile device in accordance with some examples of the disclosure. Referring now to Figure 6, a block diagram of a mobile device that is configured according to exemplary aspects is depicted and generally designated 600. In some aspects, mobile device 600 may be configured as a wireless communication device. As shown, mobile device 600 includes processor 601, which may be configured to implement the methods described herein in some aspects. Processor 601 is shown to comprise instruction pipeline 612, buffer processing unit (BPU) 608, branch instruction queue (BIQ) 611, and throttler 610 as is well known in the art. Other well-known details (e.g., counters, entries, confidence fields, weighted sum, comparator, etc.) of these blocks have been omitted from this view of processor 601 for the sake of clarity.

Processor 601 may be communicatively coupled to memory 632 over a link, which may be a die-to-die or chip-to-chip link. Mobile device 600 also include display 628 and display controller 626, with display controller 626 coupled to processor 601 and to display 628.

In some aspects, Figure 6 may include coder/decoder (CODEC) 634 (e.g., an audio and/or voice CODEC) coupled to processor 601; speaker 636 and microphone 638 coupled to CODEC 634; and wireless controller 640 (which may include a modem) coupled to wireless antenna 642 and to processor 601.

In a particular aspect, where one or more of the above-mentioned blocks are present, processor 601, display controller 626, memory 632, CODEC 634, and wireless controller 640 can be included in a system-in-package or system-on-chip device 622. Input device 630 (e.g., physical or virtual keyboard), power supply 644 (e.g., battery), display 628, input device 630, speaker 636, microphone 638, wireless antenna 642, and power supply 644 may be external to system-on-chip device 622 and may be coupled to a component of system-on-chip device 622, such as an interface or a controller.

It should be noted that although Figure 6 depicts a mobile device, processor 601 and memory 632 may also be integrated into a set top box, a music player, a video player, an entertainment unit, a navigation device, a personal digital assistant (PDA), a fixed location data unit, a computer, a laptop, a tablet, a communications device, a mobile phone, or other similar devices.

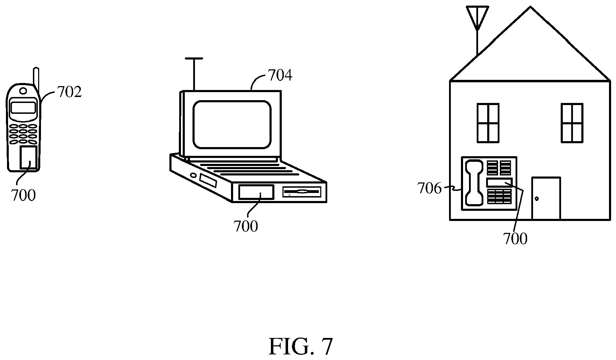

Figure 7 illustrates various electronic devices that may be integrated with any of the aforementioned integrated device, semiconductor device, integrated circuit, die, interposer, package or package-on-package (PoP) in accordance with some examples of the disclosure. For example, a mobile phone device 702, a laptop computer device 704, and a fixed location terminal device 706 may include an integrated device 700 as described herein. The integrated device 700 may be, for example, any of the integrated circuits, dies, integrated devices, integrated device packages, integrated circuit devices, device packages, integrated circuit (IC) packages, package-on-package devices described herein. The devices 702, 704, 706 illustrated in Figure 7 are merely exemplary. Other electronic devices may also feature the integrated device 700 including, but not limited to, a group of devices (e.g., electronic devices) that includes mobile devices, hand-held personal communication systems (PCS) units, portable data units such as personal digital assistants, global positioning system (GPS) enabled devices, navigation devices, set top boxes, music players, video players, entertainment units, fixed location data units such as meter reading equipment, communications devices, smartphones, tablet computers, computers, wearable devices, servers, routers, electronic devices implemented in automotive vehicles (e.g., autonomous vehicles), or any other device that stores or retrieves data or computer instructions, or any combination thereof.

It will be appreciated that various aspects disclosed herein can be described as functional equivalents to the structures, materials and/or devices described and/or recognized by those skilled in the art. For example, in one aspect, an apparatus may comprise a means for performing a function or action described above, such as decryption, that may be a processor, cryptographic component, or the equivalent of those features described herein. It will be appreciated that the aforementioned aspects are merely provided as examples and the various aspects claimed are not limited to the specific references and/or illustrations cited as examples.

One or more of the components, processes, features, and/or functions illustrated in Figures 1-7 may be rearranged and/or combined into a single component, process, feature or function or incorporated in several components, processes, or functions. Additional elements, components, processes, and/or functions may also be added without departing from the disclosure. It should also be noted that Figures 1-7 and its corresponding description in the present disclosure is not limited to dies and/or ICs. In some implementations, Figures 1-7 and its corresponding description may be used to manufacture, create, provide, and/or produce integrated devices. In some implementations, a device may include a die, an integrated device, a die package, an integrated circuit (IC), a device package, an integrated circuit (IC) package, a wafer, a semiconductor device, a package on package (PoP) device, and/or an interposer.

In this description, certain terminology is used to describe certain features. The term "mobile device" can describe, and is not limited to, a music player, a video player, an entertainment unit, a navigation device, a communications device, a mobile device, a mobile phone, a smartphone, a personal digital assistant, a fixed location terminal, a tablet computer, a computer, a wearable device, a laptop computer, a server, an automotive device in an automotive vehicle, and/or other types of portable electronic devices typically carried by a person and/or having communication capabilities (e.g., wireless, cellular, infrared, short-range radio, etc.). Further, the terms "user equipment" (UE), "mobile terminal," "mobile device," and "wireless device," can be interchangeable.

The wireless communication between electronic devices can be based on different technologies, such as code division multiple access (CDMA), W-CDMA, time division multiple access (TDMA), frequency division multiple access (FDMA), Orthogonal Frequency Division Multiplexing (OFDM), Global System for Mobile Communications (GSM), 3GPP Long Term Evolution (LTE), Bluetooth (BT), Bluetooth Low Energy (BLE), IEEE 802.11 (WiFi), and IEEE 802.15.4 (Zigbee/Thread) or other protocols that may be used in a wireless communications network or a data communications network. Bluetooth Low Energy (also known as Bluetooth LE, BLE, and Bluetooth Smart) is a wireless personal area network technology designed and marketed by the Bluetooth Special Interest Group intended to provide considerably reduced power consumption and cost while maintaining a similar communication range. BLE was merged into the main Bluetooth standard in 2010 with the adoption of the Bluetooth Core Specification Version 4.0 and updated in Bluetooth 5 .

The word "exemplary" is used herein to mean "serving as an example, instance, or illustration." Any details described herein as "exemplary" is not to be construed as advantageous over other examples. Likewise, the term "examples" does not mean that all examples include the discussed feature, advantage or mode of operation. Furthermore, a particular feature and/or structure can be combined with one or more other features and/or structures. Moreover, at least a portion of the apparatus described hereby can be configured to perform at least a portion of a method described hereby.

The terminology used herein is for the purpose of describing particular examples and is not intended to be limiting of examples of the disclosure. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, actions, operations, elements, and/or components, but do not preclude the presence or addition of one or more other features, integers, actions, operations, elements, components, and/or groups thereof.

It should be noted that the terms "connected," "coupled," or any variant thereof, mean any connection or coupling, either direct or indirect, between elements, and can encompass a presence of an intermediate element between two elements that are "connected" or "coupled" together via the intermediate element.

Any reference herein to an element using a designation such as "first," "second," and so forth does not limit the quantity and/or order of those elements. Rather, these designations are used as a convenient method of distinguishing between two or more elements and/or instances of an element. Also, unless stated otherwise, a set of elements can comprise one or more elements.

Further, many examples are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be incorporated entirely within any form of computer-readable storage medium having stored therein a corresponding set of computer instructions that upon execution would cause an associated processor to perform the functionality described herein. Thus, the various aspects of the disclosure may be incorporated in a number of different forms, all of which have been contemplated to be within the scope of the claimed subject matter. In addition, for each of the examples described herein, the corresponding form of any such examples may be described herein as, for example, "logic configured to" perform the described action.

Nothing stated or illustrated depicted in this application is intended to dedicate any component, action, feature, benefit, advantage, or equivalent to the public, regardless of whether the component, action, feature, benefit, advantage, or the equivalent is recited in the claims.

Further, those of skill in the art will appreciate that the various illustrative logical blocks, modules, circuits, and algorithm actions described in connection with the examples disclosed herein may be implemented as electronic hardware, computer software, or combinations of both. To clearly illustrate this interchangeability of hardware and software, various illustrative components, blocks, modules, circuits, and actions have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The methods, sequences and/or algorithms described in connection with the examples disclosed herein may be incorporated directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art including non-transitory types of memory or storage mediums. An exemplary storage medium is coupled to the processor such that the processor can read information from, and write information to, the storage medium. In the alternative, the storage medium may be integral to the processor.

The various illustrative logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

Although some aspects have been described in connection with a device, it goes without saying that these aspects also constitute a description of the corresponding method, and so a block or a component of a device should also be understood as a corresponding method action or as a feature of a method action. Analogously thereto, aspects described in connection with or as a method action also constitute a description of a corresponding block or detail or feature of a corresponding device. Some or all of the method actions can be performed by a hardware apparatus (or using a hardware apparatus), such as, for example, a microprocessor, a programmable computer or an electronic circuit. In some examples, some or a plurality of the most important method actions can be performed by such an apparatus.

In the detailed description above it can be seen that different features are grouped together in examples. This manner of disclosure should not be understood as an intention that the claimed examples have more features than are explicitly mentioned in the respective claim. Rather, the disclosure may include fewer than all features of an individual example disclosed. Therefore, the following claims should hereby be deemed to be incorporated in the description, wherein each claim by itself can stand as a separate example.

It should furthermore be noted that methods, systems, and apparatus disclosed in the description or in the claims can be implemented by a device comprising means for performing the respective actions of this method.

Furthermore, in some examples, an individual action can be subdivided into a plurality of sub-actions or contain a plurality of sub-actions. Such sub-actions can be contained in the disclosure of the individual action and be part of the disclosure of the individual action.

While the foregoing disclosure shows illustrative examples of the disclosure, it should be noted that various changes and modifications could be made herein without departing from the scope of the disclosure as defined by the appended claims. The functions and/or actions of the method claims in accordance with the examples of the disclosure described herein need not be performed in any particular order. Additionally, well-known elements will not be described in detail or may be omitted so as to not obscure the relevant details of the aspects and examples disclosed herein. Furthermore, although elements of the disclosure may be described or claimed in the singular, the plural is contemplated unless limitation to the singular is explicitly stated.

## Claims

1. A method for soft combining of decrypted data, comprising:
receiving (502) a first encrypted packet comprising a first packet header and a first encrypted payload;
fetching (504) a first encryption key stream based on a portion of a first packet header and a first nonce;
decrypting (506) the first encrypted packet to generate a first decrypted packet using the first encryption key stream;
storing (508) the first decrypted packet;
performing a first cyclic redundancy check, CRC, on the first encrypted packet;
requesting a re-transmission of the first encrypted packet, based on determining that the first CRC indicates an error;
receiving (510) a second encrypted packet, wherein the second encrypted packet comprises the re-transmission of the first encrypted payload;
fetching (512) a second encryption key stream based on a portion of a second packet header and a second nonce;
decrypting (514) the second encrypted packet to generate a second decrypted packet using the second encryption key stream;
combining (516) the first stored decrypted packet and the second decrypted packet to generate a first corrected packet;
storing (518) the first corrected packet;
encrypting (520) the first corrected packet using the second encryption key stream; and
performing (522) a second CRC on the encrypted first corrected packet after encrypting the first corrected packet.

2. The method of claim 1, further comprising requesting a re-transmission of the first encrypted packet when the second CRC indicates an error.

3. The method of claim 2, further comprising:
receiving a third encrypted packet;
fetching a third encryption key stream based on a portion of a third packet header and a third nonce;
decrypting the third encrypted packet to generate a third decrypted packet using the third encryption key stream;
storing the third decrypted packet;
combining the first decrypted packet, the second decrypted packet, and the third decrypted packet to generate a second corrected packet;
encrypting the second corrected packet using the third encryption key stream; and
performing a third CRC on the encrypted second corrected packet.

4. The method of claim 3, further comprising transmitting an acknowledge message when the third CRC indicates no errors.

5. The method of claim 1, wherein the method is carried out by a device selected from a group consisting of a music player, a video player, an entertainment unit, a navigation device, a communications device, a mobile device, a mobile phone, a smartphone, a personal digital assistant, a fixed location terminal, a tablet computer, a computer, a wearable device, a laptop computer, a server, and a component in an automotive vehicle.

6. An apparatus, comprising
means for receiving (502) a first encrypted packet comprising a first packet header and a first encrypted payload;
means for fetching (504) a first encryption key stream based on a portion of a first packet header and a first nonce;
means for decrypting (506) the first encrypted packet to generate a first decrypted packet using the first encryption key stream;
means for storing (508) the first decrypted packet;
means for performing a first cyclic redundancy check, CRC, on the first encrypted packet;
means for requesting a re-transmission of the first encrypted packet, based on determining that the first CRC indicates an error;
means for receiving (510) a second encrypted packet, wherein the second encrypted packet comprises the re-transmission of the first encrypted payload;
means for fetching (512) a second encryption key stream based on a portion of a second packet header and a second nonce;
means for decrypting (514) the second encrypted packet to generate a second decrypted packet using the second encryption key stream;
means for combining (516) the first stored decrypted packet and the second decrypted packet to generate a first corrected packet;
means for storing (518) the first corrected packet;
means for encrypting (520) the first corrected packet using the second encryption key stream; and
means for performing (522) a second CRC on the encrypted first corrected packet after encrypting the first corrected packet.

7. The apparatus of claim 6, comprising means for performing the steps of the method of one of claims 2-5.

8. A computer program comprising instructions which, when the program is executed by a computer, cause the computer to carry out the steps of the method of one of claims 1-5.

## Patentansprüche

1. Ein Verfahren zum weichen Kombinieren von entschlüsselten Daten, umfassend:
Empfangen (502) eines ersten verschlüsselten Pakets, das einen ersten Paket-Header und eine erste verschlüsselte Nutzlast umfasst;
Abrufen (504) eines ersten Verschlüsselungsschlüsselstroms basierend auf einem Abschnitt eines ersten Paket-Headers und einer ersten Nonce;
Entschlüsseln (506) des ersten verschlüsselten Pakets, um ein erstes entschlüsseltes Paket unter Verwendung des ersten Verschlüsselungsschlüsselstroms zu erzeugen;
Speichern (508) des ersten entschlüsselten Pakets;
Durchführen einer ersten zyklischen Redundanzprüfung, CRC, am ersten verschlüsselten Paket;
Anfordern einer Neuübertragung des ersten verschlüsselten Pakets basierend auf dem Bestimmen, dass die erste CRC einen Fehler anzeigt;
Empfangen (510) eines zweiten verschlüsselten Pakets, wobei das zweite verschlüsselte Paket die Neuübertragung der ersten verschlüsselten Nutzlast umfasst;
Abrufen (512) eines zweiten Verschlüsselungsschlüsselstroms basierend auf einem Abschnitt eines zweiten Paket-Headers und einer zweiten Nonce;
Entschlüsseln (514) des zweiten verschlüsselten Pakets, um ein zweites entschlüsseltes Paket unter Verwendung des zweiten Verschlüsselungsschlüsselstroms zu erzeugen;
Kombinieren (516) des ersten gespeicherten entschlüsselten Pakets und des zweiten entschlüsselten Pakets, um ein erstes korrigiertes Paket zu erzeugen;
Speichern (518) des ersten korrigierten Pakets;
Verschlüsseln (520) des ersten korrigierten Pakets unter Verwendung des zweiten Verschlüsselungsschlüsselstroms; und
Durchführen (522) einer zweiten CRC am verschlüsselten ersten korrigierten Paket nach dem Verschlüsseln des ersten korrigierten Pakets.

2. Verfahren nach Anspruch 1, ferner umfassend das Anfordern einer Neuübertragung des ersten verschlüsselten Pakets, wenn die zweite CRC einen Fehler anzeigt.

3. Verfahren nach Anspruch 2, ferner umfassend:
Empfangen eines dritten verschlüsselten Pakets;
Abrufen eines dritten Verschlüsselungsschlüsselstroms basierend auf einem Abschnitt eines dritten Paket-Headers und einer dritten Nonce;
Entschlüsseln des dritten verschlüsselten Pakets, um ein drittes entschlüsseltes Paket unter Verwendung des dritten Verschlüsselungsschlüsselstroms zu erzeugen;
Speichern des dritten entschlüsselten Pakets;
Kombinieren des ersten entschlüsselten Pakets, des zweiten entschlüsselten Pakets und des dritten entschlüsselten Pakets, um ein zweites korrigiertes Paket zu erzeugen;
Verschlüsseln des zweiten korrigierten Pakets unter Verwendung des dritten Verschlüsselungsschlüsselstroms; und
Durchführen einer dritten CRC am verschlüsselten zweiten korrigierten Paket.

4. Verfahren nach Anspruch 3, ferner umfassend das Übertragen einer Bestätigungsnachricht, wenn die dritte CRC keine Fehler anzeigt.

5. Verfahren nach Anspruch 1, wobei das Verfahren durch eine Vorrichtung ausgeführt wird, die aus einer Gruppe ausgewählt ist, die aus einem Musikabspielgerät, einem Videoabspielgerät, einer Unterhaltungseinheit, einer Navigationsvorrichtung, einer Kommunikationsvorrichtung, einer mobilen Vorrichtung, einem Mobiltelefon, einem Smartphone, einem persönlichen digitalen Assistenten, einem Endgerät mit festem Standort, einem Tablet-Computer, einem Computer, einer am Körper tragbaren Vorrichtung, einem Laptop-Computer, einem Server und einer Komponente in einem Kraftfahrzeug besteht.

6. Eine Vorrichtung umfassend
Mittel zum Empfangen (502) eines ersten verschlüsselten Pakets, das einen ersten Paket-Header und eine erste verschlüsselte Nutzlast umfasst;
Mittel zum Abrufen (504) eines ersten Verschlüsselungsschlüsselstroms basierend auf einem Abschnitt eines ersten Paket-Headers und einer ersten Nonce;
Mittel zum Entschlüsseln (506) des ersten verschlüsselten Pakets, um ein erstes entschlüsseltes Paket unter Verwendung des ersten Verschlüsselungsschlüsselstroms zu erzeugen;
Mittel zum Speichern (508) des ersten entschlüsselten Pakets;
Mittel zum Durchführen einer ersten zyklischen Redundanzprüfung, CRC, am ersten verschlüsselten Paket;
Mittel zum Anfordern einer Neuübertragung des ersten verschlüsselten Pakets basierend auf dem Bestimmen, dass die erste CRC einen Fehler anzeigt;
Mittel zum Empfangen (510) eines zweiten verschlüsselten Pakets, wobei das zweite verschlüsselte Paket die Neuübertragung der ersten verschlüsselten Nutzlast umfasst;
Mittel zum Abrufen (512) eines zweiten Verschlüsselungsschlüsselstroms basierend auf einem Abschnitt eines zweiten Paket-Headers und einer zweiten Nonce;
Mittel zum Entschlüsseln (514) des zweiten verschlüsselten Pakets, um ein zweites entschlüsseltes Paket unter Verwendung des zweiten Verschlüsselungsschlüsselstroms zu erzeugen;
Mittel zum Kombinieren (516) des ersten gespeicherten entschlüsselten Pakets und des zweiten entschlüsselten Pakets, um ein erstes korrigiertes Paket zu erzeugen;
Mittel zum Speichern (518) des ersten korrigierten Pakets;
Mittel zum Verschlüsseln (520) des ersten korrigierten Pakets unter Verwendung des zweiten Verschlüsselungsschlüsselstroms; und
Mittel zum Durchführen (522) einer zweiten CRC am verschlüsselten ersten korrigierten Paket nach dem Verschlüsseln des ersten korrigierten Pakets.

7. Vorrichtung nach Anspruch 6, umfassend Mittel zum Durchführen der Schritte des Verfahrens nach einem der Ansprüche 2-5.

8. Ein Computerprogramm umfassend Anweisungen, die, wenn das Programm von einem Computer ausgeführt wird, den Computer veranlassen, die Schritte des Verfahrens nach einem der Ansprüche 1-5 auszuführen.

## Revendications

1. Un procédé de combinaison évolutive de données déchiffrées, comprenant :
la réception (502) d'un premier paquet chiffré comprenant un premier en-tête de paquet et une première charge utile chiffrée ;
la récupération (504) d'un premier flux de clé de chiffrement sur la base d'une partie d'un premier en-tête de paquet et d'un premier nombre aléatoire ;
le déchiffrement (506) du premier paquet chiffré pour générer un premier paquet déchiffré en utilisant le premier flux de clé de chiffrement ;
le stockage (508) du premier paquet déchiffré ;
la réalisation d'un premier contrôle de redondance cyclique, CRC, sur le premier paquet chiffré ;
la requête d'une retransmission du premier paquet chiffré sur la base de la détermination que le premier CRC indique une erreur ;
la réception (510) d'un deuxième paquet chiffré, dans lequel le deuxième paquet chiffré comprend la retransmission de la première charge utile chiffrée ;
la récupération (512) d'un deuxième flux de clé de chiffrement sur la base d'une partie d'un deuxième en-tête de paquet et d'un deuxième nombre aléatoire ;
le déchiffrement (514) du deuxième paquet chiffré pour générer un deuxième paquet déchiffré en utilisant le deuxième flux de clé de chiffrement ;
la combinaison (516) du premier paquet déchiffré stocké et du deuxième paquet déchiffré pour générer un premier paquet corrigé ;
le stockage (518) du premier paquet corrigé ;
le chiffrement (520) du premier paquet corrigé en utilisant le deuxième flux de clé de chiffrement ; et
la réalisation (522) d'un deuxième CRC sur le premier paquet corrigé chiffré après avoir chiffré le premier paquet corrigé.

2. Le procédé selon la revendication 1, comprenant en outre la requête d'une retransmission du premier paquet chiffré lorsque le deuxième CRC indique une erreur.

3. Le procédé selon la revendication 2, comprenant en outre :
la réception d'un troisième paquet chiffré ;
la récupération d'un troisième flux de clé de chiffrement sur la base d'une partie d'un troisième en-tête de paquet et d'un troisième nombre aléatoire ;
le déchiffrement du troisième paquet chiffré pour générer un troisième paquet déchiffré en utilisant le troisième flux de clé de chiffrement ;
le stockage du troisième paquet déchiffré ;
la combinaison du premier paquet déchiffré, du deuxième paquet déchiffré et du troisième paquet déchiffré pour générer un deuxième paquet corrigé ;
le chiffrement du deuxième paquet corrigé en utilisant le troisième flux de clé de chiffrement ; et
la réalisation d'un troisième CRC sur le deuxième paquet corrigé chiffré.

4. Le procédé selon la revendication 3, comprenant en outre la transmission d'un message d'accusé de réception lorsque le troisième CRC n'indique aucune erreur.

5. Le procédé selon la revendication 1, dans lequel le procédé est mis en œuvre par un dispositif choisi dans un groupe constitué d'un lecteur de musique, d'un lecteur vidéo, d'une unité de divertissement, d'un dispositif de navigation, d'un dispositif de communication, d'un dispositif mobile, d'un téléphone mobile, d'un smartphone, d'un assistant numérique personnel, d'un terminal à emplacement fixe, d'une tablette électronique, d'un calculateur, d'un dispositif pouvant être porté, d'un ordinateur portable, d'un serveur et d'un composant dans un véhicule automobile.

6. Un appareil, comprenant
des moyens pour recevoir (502) un premier paquet chiffré comprenant un premier en-tête de paquet et une première charge utile chiffrée ;
des moyens pour récupérer (504) un premier flux de clé de chiffrement sur la base d'une partie d'un premier en-tête de paquet et d'un premier nombre aléatoire ;
des moyens pour déchiffrer (506) le premier paquet chiffré pour générer un premier paquet déchiffré en utilisant le premier flux de clé de chiffrement ;
des moyens pour stocker (508) le premier paquet déchiffré ; des moyens pour réaliser un premier contrôle de redondance cyclique, CRC, sur le premier paquet chiffré ;
des moyens pour requérir une retransmission du premier paquet chiffré sur la base de la détermination que le premier CRC indique une erreur ;
des moyens pour recevoir (510) un deuxième paquet chiffré, dans lequel le deuxième paquet chiffré comprend la retransmission de la première charge utile chiffrée ;
des moyens pour récupérer (512) un deuxième flux de clé de chiffrement sur la base d'une partie d'un deuxième en-tête de paquet et d'un deuxième nombre aléatoire ;
des moyens pour déchiffrer (514) le deuxième paquet chiffré pour générer un deuxième paquet déchiffré en utilisant le deuxième flux de clé de chiffrement ;
des moyens pour combiner (516) le premier paquet déchiffré stocké et le deuxième paquet déchiffré pour générer un premier paquet corrigé ;
des moyens pour stocker (518) le premier paquet corrigé ; des moyens pour chiffrer (520) le premier paquet corrigé en utilisant le deuxième flux de clé de chiffrement ; et des moyens pour réaliser (522) un deuxième CRC sur le premier paquet corrigé chiffré après avoir chiffré le premier paquet corrigé.

7. L'appareil selon la revendication 6, comprenant des moyens pour réaliser les étapes du procédé de l'une des revendications 2 à 5.

8. Un programme informatique comprenant des instructions qui, lorsque le programme est exécuté par un calculateur, amènent le calculateur à effectuer les étapes du procédé de l'une des revendications 1 à 5.
